# EUROPEAN PATENT APPLICATION

(11) **EP 4 826 576 A1**
(43) Date of publication of application: **21.10.2026**
(21) Application number: 26172689.7
(22) Date of filing: 16.04.2026
(51) Int. Cl.: G06F 21/10, G06Q 50/18, H04L 9/00, G06Q 20/06, G06Q 20/36

(54) **BLOCKCHAIN-BASED DYNAMIC DIGITAL RIGHTS MANAGEMENT FOR CONTENT DISTRIBUTION**

(30) Priority: 17.04.2025 US 202519181749
(71) Applicant: Kbean Inc., Hercules California 94547 (US)
(72) Inventor: LEE, Joonho, Hercules, 94547 (US); NAM, Kiyoung, Hercules, 94547 (US); BOYACA, Jaime, Flemington, 08822 (US)
(74) Representative: Müller-Boré & Partner Patentanwälte PartG mbB

(57) **Abstract**

A method of enabling flexible digital rights management through modifiable hybrid tokens is disclosed. One or more hybrid tokens associated with digital content are created. Each hybrid token is fungible within a specific creator's content but non-fungible when compared to other creators' tokens. One or more properties of at least one of the one or more hybrid tokens are modified. The modifying includes expiring or revoking at least one of the one or more hybrid tokens or changing a fungible/non-fungible state of the at least one of the one or more hybrid tokens.

## Description

### TECHNICAL FIELD

The present application relates generally to the technical field of digital rights management and bi-directional interactive streaming and, in one specific example, to a hybrid token technology that serves as a foundation for dynamic and conditional digital rights management and/or enables bi-directional interactive streaming features.

### BACKGROUND

The streaming media industry has undergone significant transformations in recent years, driven by advancements in digital technology and changing consumer preferences. Traditional broadcasting models have given way to on-demand content delivery systems, allowing users to access a wide variety of entertainment options at their convenience. Concurrently, the rise of blockchain technology has introduced new possibilities for digital asset management and ownership verification across various sectors. In the realm of digital rights management, content creators and distributors have long grappled with challenges related to piracy, fair compensation, royalty management, and maintaining control over their intellectual property in an increasingly decentralized digital landscape. As streaming platforms continue to evolve, there is a growing interest in developing self distribution of contents, more interactive and personalized viewing experiences that can engage audiences in novel ways while also addressing longstanding issues in copyright protection, royalty enforcement, content distribution and direct monetization.

### BRIEF DESCRIPTION OF THE DRAWINGS

Some embodiments are illustrated by way of example, and not limitation, in the figures of the accompanying drawings.
FIG. 1 is a network diagram depicting a system within which various example embodiments may be deployed.
FIG. 2 is a block diagram illustrating example modules of the service(s) of FIG. 1.
FIG. 3 is a block diagram illustrating an example method of creating, distributing, and/or managing hybrid tokens that serve as proof of ownership and/or access keys for digital content, while also facilitating dynamic rights management and/or interactive content delivery.
FIG. 4 is a block diagram illustrating an example method of integrating rates hybrid token technology with synchronized multi-device content delivery and/or user content interaction that also enables location and time-based interaction like content within a time capsule.
FIG. 5 is a block diagram illustrating the structure and lifecycle of hybrid tokens of the system.
FIG. 6 is a block diagram illustrating a mobile device according to various example embodiments.
FIG. 7 is a block diagram of an example computer system on which methodologies and operations described herein may be executed, in accordance with an example embodiment.

### DETAILED DESCRIPTION

In the following description, for purposes of explanation, numerous specific details are set forth in order to provide an understanding of various embodiments of the present subject matter. It will be evident, however, to those skilled in the art that various embodiments may be practiced without these specific details.

Social media and advertisements typically use a continuous "push" model where recipients are flooded with notifications that effectively dilute the effect and quality of an anticipated social engagement. Current technologies have attempted to resolve this issue by gathering and analyzing personal information and behaviors of users to better target the consumers undermining the privacy and the merit of a creator's content. In example embodiments, a trusted network of social engagement is provided where messages (e.g., social messages, licensed creative contents, advertisements, or redeemable coupons) are delivered to recipients only when the certain conditions defined by the sender are met. The message is effectively a virtual beacon or virtual time capsule that is waiting to be picked by the designated recipients. The message may also be directly linked with the corresponding hybrid token that contains the same conditions, intended recipient ID, and/or other necessary meta information to secure the message. Examples of conditions may include physical location, virtual location, and/or date/time.

In example embodiments, at least some of the disclosed systems and methods use a novel type of token that combines properties of both fungible and non-fungible tokens. These hybrid tokens are fungible within the context of a specific creator's content (and may, for example, represent multiple licenses that may be distributed) but non-fungible when compared to other creators' tokens.

This unique structure enables shared ownership of a digital asset while maintaining the overall asset's uniqueness, allowing creators to issue multiple licenses for a single piece of content securely.

In example embodiments, an innovative asynchronous queuing mechanism for blockchain transactions is employed (e.g., to address the issue of slow transaction times). This queuing system assesses blockchain speed, strategically queues smart contract execution and/or token minting requests and/or releases them at optimal times, and/or performs reconciliation asynchronously to improve efficiency and/or reduce congestion-related delays.

This efficient queuing system may ensure that the token-based rights management operates smoothly at scale, addressing potential bottlenecks, such as those that could hinder real-time interactivity on a streaming platform.

The hybrid tokens may serve as both proof of ownership and access keys, enabling user rights to be verified before access is granted (e.g., to interactive features, high-quality content streams, or issue or redeem a token of value.

This blockchain-based access control allows for granular management of content access, enabling features such as providing different quality levels based on the specific token held by the user. The system may be configured to maintain a balance between decentralization and content protection through a combination of on-chain token verification and off-chain content delivery (e.g., at specific conditions as defined by the creator. Such conditions may include activation at a certain user's ID, GPS location and/or date/time.

In example embodiments, integrated with this token system is a sophisticated interactive streaming mechanism and/or just-in-time user engagement mechanism. These mechanisms enable content creators to dynamically insert themselves or additional content into a stream at specific points, achieved through a synchronization mechanism between a first application (e.g., a TV app) and a second application (e.g., a mobile app) while only those users who hold the specific tokens could enjoy the contents or redeem the value when the conditions tied to the tokens are met.

This dual-screen approach allows for interactive content to be displayed on a second (e.g., mobile) device while a main stream continues uninterrupted on a first device, solving the problem of intrusive on-screen overlays. In example embodiments, content creators are allowed (e.g., programmatically or via a provided graphical user interface) to mark specific interaction points in their content, which can be dynamically updated without altering the original stream, addressing limitations of pre-baked interactive content that is integrated into the original stream. Traditionally the interactive content (e.g., advertisement) may be ancillary to the original content and displayed when the original contents are streamed. In contrast, the system disclosed herein provides for decoupled but bi-directional synchronization between the two contents (original and interactive); the interactive contents in the form of digital token can invoke the original contents or vice versa.

In example embodiments, the system creates a two-way, interactive experience between a TV streaming application and a companion mobile app. Unlike existing models where the mobile device is only a passive companion (e.g., second screen experiences), our platform supports bidirectional communication of media content between devices.

User-generated content from mobile to TV. Users can create content such as video reactions, text, or chat messages on their phones while watching a show. This content can be sent to the TV app and displayed during playback, either in real-time or asynchronously. For example, a user could record a 7-second reaction to a scene, which their friends can see when they watch the same part of the show.

Synchronized social co-viewing. Multiple users watching the same show simultaneously can exchange real-time reactions (video, text, or chat) that are displayed on the TV, enabling a shared social experience. Example embodiments support a watch party where messages or video reactions from friends show up on the TV.

Creator-driven interactive content. Content creators can push supplemental content to viewers' mobile devices at specific moments in the show like behind-the-scenes clips, polls, or even ads without interrupting the TV viewing experience. This enables time-synced, contextual interactions that enrich or monetize the experience.

The combination of these features, including the mobile-to-TV content push, time-coded synchronization, and integration with a social graph (e.g., "friends-only" visibility), creates a novel platform for interactive streaming. It's more than just co-watching or second-screen interaction. It's a social layer integrated into the core of the streaming experience, with real-time and asynchronous interaction between viewers.

The system's implementation of a social aspect to streaming enables multiple users to interact with the same content simultaneously (e.g., peer-to-peer), sharing comments, reactions, or mini-videos, and so on that may then appear on a display screen associated with the first application (e.g., at defined time and/or physical location).

This feature creates a shared viewing experience even when users are not physically together, solving the problem of isolated viewing experiences in traditional streaming platforms. In addition, depending on how the creators created the condition of interaction, each user may have different interactive experiences over the same original content.

In example embodiments, the challenge of asynchronous viewing is addressed by allowing users to join and interact with content at different times while maintaining a cohesive interactive experience, achieved through clever management of viewing timelines and interaction data.

In example embodiments, targeted, interactive advertisements delivered to the user's mobile device are introduced at specific points in a stream, allowing for a non-disruptive yet highly engaging advertising experience specifically tailored to the users at certain location and/or certain time for a just-in-time advertising experience.

This approach balances monetization with user experience in streaming platforms in a non-intrusive way.

The flexibility of the hybrid tokens supports the dynamic nature of the interactive content license. As creators update or modify their interactive elements, token properties, access rights, and/or access conditions can be adjusted accordingly, all while maintaining the integrity of the original content and user ownership.

This integration of hybrid tokens and interactive streaming creates a next-generation streaming platform that offers unprecedented levels of interactivity, security, flexibility, direct marketplace with royalty, and meaningful engagement for both content creators and consumers, addressing key limitations in prior art systems and creating a more flexible, efficient, and creator-friendly digital content ecosystem.

Traditional blockchain-based tokens were typically either fully fungible (e.g., cryptocurrencies or meme coins) or non-fungible (e.g., unique digital collectibles or NFTs), limiting their flexibility in representing more complex rights structures.

The hybrid token system solves this by creating tokens that are fungible within a specific context (e.g., licenses for a particular digital asset like music, film, or art) but non-fungible when compared across different contexts. This allows for fractional ownership and/or more granular control over digital rights, enabling content creators to issue multiple licenses for their work while maintaining the uniqueness of the overall asset.

Another significant limitation in prior systems was the static nature of tokens once issued. The hybrid token system introduces dynamic modifications, allowing tokens to be not only expired or revoked, but also have their nature changed as needed to reflect the most up to date information (e.g., as reflected through a continual tracking the digital signature of the prior information within the latest block of record). This addresses the inflexibility of traditional blockchain-based rights management.

To tackle the problem of unknown transaction times or gas price required on any type of blockchains (e.g., Proof of Stake or Proof of Work based Blockchain), at least some of the disclosed systems and methods may use an innovative queuing system for executing smart contract or minting tokens. This also makes the overall system resilient from any operational issue, or security issue at the public block chain. This queueing system assesses block chain health, blockchain speed, queues requests, and/or releases them at optimal times, and may include asynchronous reconciliation to improve overall efficiency and resiliency.

The disclosed hybrid token technology also solves a technical problem of disconnection between content delivery and licensing management by directly tying tokens to content access and/or interaction capabilities. To manage and track how each of the licenses issued by the digital asset is used, the traditional NFT model does not work. For example, the current NFT model would be inefficient and expensive to maintain by treating each license with a different NFT. In example embodiments, the disclosed system also enables seamless integration of different access levels (e.g., previews and/or full 4K streaming) based on the specific token held by a user, enforcement of royalty payment, and/or detection of suspicious transactions.

In example embodiments, the system addresses the limitations of static, pre-baked interactive content (e.g., by allowing creators to dynamically insert and update interactive elements at specific points in their content without altering the original material). This creator-controlled interactivity is managed through the hybrid token system, ensuring that only authorized token holders at the defined time and/or at the defined location can access these features. Additionally, the technology enables a synchronized multi-device experience, solving the technical problem of disconnected viewing across platforms.

In example embodiments, the system synchronizes multiple applications (e.g., TV and mobile apps) (e.g., allowing for interactive content on mobile devices while streaming continues on the TV). It also manages different viewing timelines for multiple users while maintaining a cohesive interactive experience, even for users not watching in real-time. In example embodiments, by addressing these technological problems, a comprehensive technological solution is provided that integrates sophisticated digital rights management with interactive, multi-device content delivery, offering unprecedented flexibility for content creators and more engaging experiences for users in the streaming ecosystem.

In example embodiments, the system provides a revolutionary two-way interactive streaming experience between a TV streaming application and a companion mobile app that fundamentally transforms how viewers engage with content and each other. Unlike existing models where mobile devices serve merely as passive companions, this platform supports true bidirectional communication of media content between devices, enabling users to create and push content from their mobile devices directly to the TV screen. This capability allows viewers to share video reactions, text messages, and chat that appears during playback for all participants to see, transforming passive viewing into an active, participatory experience.

The system enables synchronized social co-viewing where multiple geographically separated users can share a cohesive viewing experience, with their reactions and messages appearing on each other's TV screens in real-time, effectively creating virtual watch parties that overcome physical separation.

Content creators can leverage this technology to deliver supplemental content to viewers' mobile devices at precise moments in the show without interrupting the main viewing experience, creating opportunities for enriched storytelling, behind-the-scenes information, and non-disruptive monetization through contextual interactions.

The integration of these features-including mobile-to-TV content push, time-coded synchronization, and social graph integration with features like "friends-only" visibility-creates a social layer embedded directly into the streaming platform itself, going beyond simple co-watching or second-screen applications by enabling true bidirectional content flow between devices and viewers. This approach fundamentally changes how people experience streamed content together while solving the problem of isolated viewing experiences in traditional streaming platforms and providing content creators with unprecedented flexibility in engaging with their audience.

Hybrid Token Creation and Structure: In example embodiments, as described herein, a novel type of token that combines properties of both fungible and non-fungible tokens is used. These hybrid tokens are fungible within the context of a specific creator's content but non-fungible when compared to other creators' tokens. Under the same creator's content ("Asset"), each fungible token is configurable to be associated with different information (e.g., access conditions) subsequently after the initial issuance.

This structure allows for fractional ownership of digital assets while maintaining the uniqueness of the overall asset. And each fractional ownership of the license may have or linked to information about a secure digital ID of the owner, hash value of the previous update, and/or license terms. For example, a creator can issue multiple licenses (represented by fungible tokens) for a single film, but these tokens are non-fungible when compared to tokens for a different film. These tokens may contain master terms. As the fungible token transfers the ownership through purchases, any required and allowed updates (or additions) may be made or linked directly to the fungible token. Another good example use of "hybrid token" may be with respect to an ID issued by a company or agency (e.g., government body). Such IDs may be non fungible in nature. However, there may be different and/or multiple layers of non-fungibility requirements within the issuer company or the agency, such as picture update, renewal, and/or access changes.

Automated Token Minting and Distribution: In example embodiments, a "do-it-yourself" platform for content creators is provided that is configured to mint and distribute their hybrid tokens. This automated process simplifies the creation of digital assets, allowing creators to specify parameters such as the number of editions and price per token. The system then handles the complex backend processes of token creation and distribution.

Asynchronous Queuing System for Blockchain Transactions: In example embodiments, the system implements an innovative queuing mechanism (e.g., to address the issue of slow or unknown transaction times on blockchain networks and/or potentially compromised block chains). This queuing system assesses the overall health of the target block chain, the speed of the blockchain, strategically queues token minting requests, and/or releases them at optimal times. The system may perform reconciliation asynchronously, significantly improving overall efficiency and/or resiliency, and/or reducing congestion-related delays.

Dynamic Digital Rights Management: In example embodiments, unlike traditional blockchain tokens that are often permanent and unchangeable once issued, dynamic modifications to the tokens is enabled. Key features include the ability to reflect most recent data about the ownership, hash of the transaction history of the token itself, expiration date, and/or renewal date, or revoke tokens when necessary (e.g., when a subscription ends), flexibility to change the nature of the token (fungible or non-fungible) dynamically, and/or implementation of future contracts, where tokens are minted only when certain conditions are met. This may be accomplished by a multi-nested chain model.

Blockchain-Based Access Control: In example embodiments, the hybrid tokens are used as a mechanism for digital rights management and/or access control. When a user attempts to access content, the system verifies the user's ownership and terms of the appropriate token on the blockchain. This allows for granular control over content access, enabling features such as providing different quality levels (e.g., preview, full 4K streaming, etc.) or terms of license (e.g., date/time and/or location of access) based on the specific token held by the user.

Decentralized Yet Controlled Distribution: In example embodiments, while leveraging blockchain technology for decentralization, a level of control that allows for effective rights management is also maintained. This may be achieved through a combination of on-chain token verification and off-chain content delivery, providing dual check and balance between decentralization and content protection. The dual check may be done by a centrally managed ledger system that does asynchronous reconciliation or it may be implemented in decentralized ledger system in multi-chain model referencing its checks and balance.

In example embodiments, interactive streaming and/or synchronized content delivery is integrated into a flexible, blockchain-based content distribution system. In example embodiments, a new form of interactive streaming is provided, where content creators can dynamically insert themselves or additional content into a stream at specific points.

This may be achieved through a sophisticated synchronization mechanism between a first app and a second app, allowing for interactive content to be displayed on a first device (e.g., a mobile device) while the main stream continues uninterrupted on the other device (e.g., a TV). This dual-screen approach solves the problem of intrusive on-screen overlays that can detract from the viewing experience.

In example embodiments, content creators are allowed to mark specific points in their content where interactions can occur, and these interaction points (and the interactive content itself) can be dynamically updated or changed without altering the original stream. This flexibility addresses the limitations of pre-baked interactive content, allowing creators to keep their content fresh and/or relevant over time.

In example embodiments, a social aspect to streaming is introduced, enabling multiple users to interact with the same content simultaneously. Users can share comments, reactions, or even mini-videos that appear on the TV screen, creating a shared viewing experience even when users are not physically together. This feature solves the problem of isolated viewing experiences in traditional streaming platforms.

In example embodiments, interactive streaming technology is tightly integrated with the hybrid token technology. Access to interactive features is controlled by the hybrid tokens, ensuring that only authorized users (token holders) can participate in these enhanced experiences. This integration provides a seamless connection between content ownership, access rights, and interactive capabilities (e.g., as defined by the terms of how the contents should be enjoyed).

The challenge of asynchronous viewing is addressed by allowing users to join and interact with content at different times while still maintaining a cohesive interactive experience. This is achieved through clever management of viewing timelines and interaction data.

In example embodiments, a new way of implementing targeted, interactive advertisements is supported. Instead of interrupting the main content (e.g., being displayed on a first device, such as a television), advertisements can be delivered to a second device (e.g., the user's mobile device) at specific points in the stream (that are relevant to the streaming content), allowing for a non-disruptive yet highly engaging advertising experience that is relevant to the users' circumstances (e.g., location, date, time and/or behavior). This approach solves the problem of balancing monetization with user experience in streaming platforms and challenges of providing advertisement at the right time, at right place, and for right purpose.

In example embodiments, interactive streaming and/or synchronized content delivery works in tandem with the hybrid token technology to create a comprehensive, next-generation streaming platform that offers unprecedented levels of interactivity, flexibility, and/or engagement for content creators and/or consumers.

In example embodiments, use of hybrid tokens forms a foundation of an overall content distribution and interaction system. For example, the hybrid tokens may serve as both a proof of ownership and an access key, allowing the system to verify user rights and/or license terms before granting access to interactive features, high-quality content streams, and/or interactive material.

The flexibility of the hybrid tokens also supports the dynamic nature of the interactive content. As creators update or modify their interactive elements, the system can adjust token properties or access rights accordingly, all while maintaining the integrity of the original content and user ownership.

Furthermore, the efficient queuing system for blockchain transactions ensures that the token-based rights management can operate smoothly at scale, addressing potential bottlenecks that could otherwise hinder the real-time interactivity of the streaming platform.

In essence, a technological backbone is provided that enables the seamless integration of content creation, license management, content distribution, and/or interactive streaming, addressing key limitations in prior art systems and creating a more flexible, efficient, and/or creator-friendly digital content ecosystem.

In example embodiments, a method of enabling flexible digital rights management through modifiable hybrid tokens is disclosed.

One or more hybrid tokens associated with digital content are created. Each hybrid token is fungible within a specific creator's content but non-fungible when compared to other creators' tokens. One or more properties of at least one of the one or more hybrid tokens are modified. The modifying includes expiring or revoking at least one of the one or more hybrid tokens or changing a fungible/non-fungible state of the at least one of the one or more hybrid tokens, or updating or adding additional license terms as allowed by the original creator of the token.

In example embodiments, a method for interactive content delivery is disclosed.

Playback of digital content is synchronized across multiple devices is disclosed. A first device (e.g., a television or any other streaming enabled device) displays the digital content and a second device (e.g., a mobile device) displays interactive elements that could be content augmentation, just-in-time advertisement, fan engagement, or more. One or more interactive elements are dynamically pushed and streamed into the digital content based on predefined markers. The one or more interactive elements are displayed on the second without interrupting playback on the first device. One or more group interactions are managed by creating virtual viewing sessions where multiple users can simultaneously interact with the digital content, including sharing user-generated content that appears on other users' devices. Asynchronous viewing is managed by storing interaction data associated with specific points in the digital content timeline and retrieving relevant past interactions for users joining a viewing session at different times.

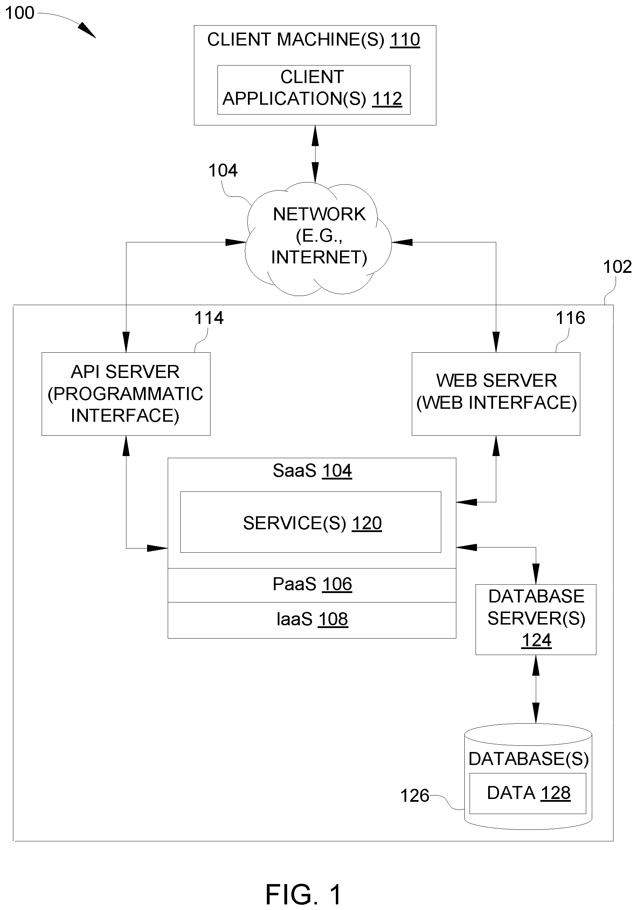

FIG. 1 is a network diagram depicting a system 100 within which various example embodiments may be deployed.

A networked system 102, in the example form of a cloud computing service, such as Microsoft Azure or other cloud service, provides server-side functionality, via a network 104 (e.g., the Internet or Wide Area Network (WAN)) to one or more endpoints (e.g., client machines 110). The networked system 102 is also referred to herein as "Lattice," the "Analytics Application," the "system," or the "platform." FIG. 1 illustrates client application(s) 112 on the client machines 110. Examples of client application(s) 112 may include a web browser application, such as the Internet Explorer browser developed by Microsoft Corporation of Redmond, Washington or other applications supported by an operating system of the device, such as applications supported by Windows, iOS or Android operating systems. Examples of such applications include e-mail client applications executing natively on the device, such as an Apple Mail client application executing on an iOS device, a Microsoft Outlook client application executing on a Microsoft Windows device, or a Gmail client application executing on an Android device. Examples of other such applications may include calendar applications and file sharing applications. Each of the client application(s) 112 may include a software application module (e.g., a plug-in, add-in, or macro) that adds a specific service or feature to the application.

An API server 114 and a web server 116 are coupled to, and provide programmatic and web interfaces respectively to, one or more software services, which may be hosted on a software-as-a-service (SaaS) layer or platform 105. The SaaS platform may be part of a service-oriented architecture, being stacked upon a platform-as-a-service (PaaS) layer 106 which, may be, in turn, stacked upon a infrastructure-as-a-service (IaaS) layer 108 (e.g., in accordance with standards defined by the National Institute of Standards and Technology (NIST)).

While the service(s) 120 are shown in FIG. 1 to form part of the networked system 102, in alternative embodiments, the service(s) 120 may form part of a service that is separate and distinct from the networked system 102.

Further, while the system 100 shown in FIG. 1 employs a cloud-based architecture, various embodiments are, of course, not limited to such an architecture, and could equally well find application in a client-server, distributed, or peer-to-peer system, for example. The various service(s) 120 (e.g., server applications) could also be implemented as standalone software programs. Additionally, although FIG. 1 depicts machines 110 as being coupled to a single networked system 102, it will be readily apparent to one skilled in the art that client machines 110, as well as client applications 112, may be coupled to multiple networked systems, such as payment applications associated with multiple payment processors or acquiring banks (e.g., PayPal, Visa, MasterCard, and American Express).

Web applications executing on the client machine(s) 110 may access the various service(s) 120 via the web interface supported by the web server 116.

Similarly, native applications executing on the client machine(s) 110 may accesses the various services and functions provided by the service(s) 120 via the programmatic interface provided by the API server 114. For example, the third-party applications may, utilizing information retrieved from the networked system 102, support one or more features or functions on a website hosted by the third party.

The service(s) 120 may be hosted on dedicated or shared server machines (not shown) that are communicatively coupled to enable communications between server machines. The service(s) 120 themselves are communicatively coupled (e.g., via appropriate interfaces) to each other and to various data sources, so as to allow information to be passed between the service(s) 120 and so as to allow the service(s) 120 to share and access common data. The service(s) 120 may furthermore access one or more databases 126 via the database servers 124. In example embodiments, various data items are stored in the database(s) 126, such as data 128, including goals data items and/or compensation data items described herein. In example embodiments, the data 128 includes one or more data items or metadata items that are viewable and/or editable via one or more graphical user interfaces described herein. The data 128 may include data items that are interrelated, connected, or interlinked, to, for example, provide connections between ATS data items and HRIS data items, as described in more detail herein. In example embodiments, the data items may be stored and maintained in subsystems of the system and made accessible via one or more APIs, as described herein.

Navigation of the networked system 102 may be facilitated by one or more navigation applications. For example, a search application (as an example of a navigation application) may enable keyword searches of data items included in the one or more database(s) 126 associated with the networked system 102. Various other navigation applications may be provided to supplement the search and browsing applications.

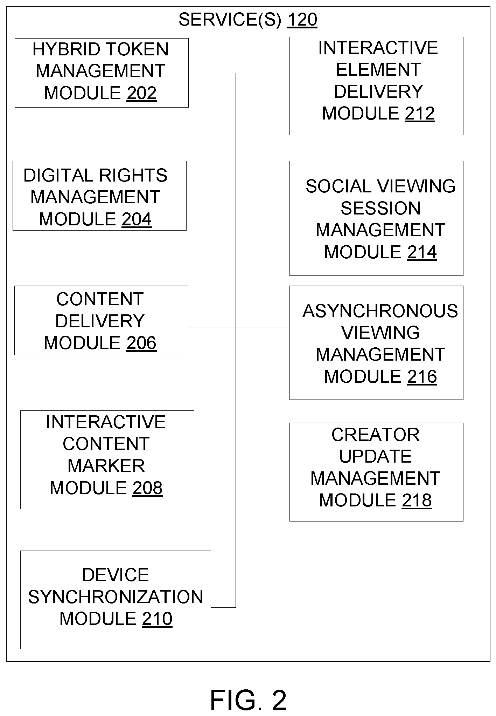

FIG. 2 is a block diagram illustrating example modules of the service(s) 120.

A hybrid token management module 202 may be configured to handle the creation, distribution, and/or management of hybrid tokens. It may be configured to interface with the blockchain and/or implement an asynchronous queuing mechanism for efficient token minting and/or distribution.

A digital rights management (DRM) module 204 may be configured to manage access control based on token ownership, handle token verification, and/or grant appropriate levels of content access.

A content delivery module 206 may be configured to stream content (e.g., at various quality levels based on user rights and/or device capabilities).

An interactive content marker module 208 may be configured to allow content creators to mark specific points in their content for potential interactions and/or manage these markers.

A device synchronization module 210 may be configured to handle real-time communication and/or synchronization between a first app and a second app (e.g., to ensure interactive elements are triggered at the right moments).

An interactive element delivery module 212 may be configured to manage the retrieval and/or delivery of interactive content to users' devices at the appropriate times during content playback.

A social viewing session management module 214 may be configured to handle the creation and/or management of group viewing sessions, including user authentication and/or content synchronization across multiple viewers.

An asynchronous viewing management module 216 may be configured to manage the storage and/or retrieval of interaction data for users joining viewing sessions at different times.

A creator update management module 218 may be configured to allow content creators to modify interactive elements and/or ensure the latest versions are presented to viewers.

A targeted advertising module may be configured to analyze user data and/or content context to deliver personalized advertisements within the interactive streaming framework.

A quality and/or performance management module may be configured to monitors system performance, manage content quality based on network conditions, and/or ensure smooth delivery of main content and/or interactive elements.

In example embodiments, the Device Synchronization Module 210 establishes and maintains real-time communication channels between the TV app and mobile app. For example, the module may implement WebSocket protocols to create persistent connections between devices, enabling continuous data streaming with minimal latency. The module employs a session management system that pairs devices through secure authentication tokens and maintains synchronization by continuously exchanging timestamp data to ensure both devices remain temporally aligned despite potential network fluctuations.

For content marking and interactive element delivery, the Interactive Content Marker Module 208 provides content creators with an interface to designate precise timestamps within their content. These markers are stored in a specialized database structure that associates them with specific content IDs and timestamps. When content plays, the system continuously monitors the playback progress and triggers the Interactive Element Delivery Module 212 to push corresponding interactive elements to the mobile device at precisely the right moments.

The Social Viewing Session Management Module 214 enables the multiuser interaction capabilities. This module creates virtual viewing sessions with unique session IDs that multiple authenticated users can join. It implements a publish-subscribe messaging architecture where each user's device subscribes to the session's message stream, allowing real-time distribution of user-generated content across all connected devices. The module handles user authentication, manages participant lists, and synchronizes playback positions across all session members.

For asynchronous viewing scenarios, the Asynchronous Viewing Management Module 216 stores interaction data with associated metadata (timestamps, user IDs, interaction types) in an indexed database. When users join a session at different times, this module retrieves relevant past interactions based on the current playback position, enabling new viewers to experience a cohesive interactive experience even when not watching in real-time.

The Creator Update Management Module 218 allows content creators to modify interactive elements without altering the original content. This module maintains version control of interactive elements and ensures the latest versions are presented to viewers. It implements a content delivery network (CDN) approach to efficiently distribute updated interactive elements to all users accessing the content.

These modules are integrated with the hybrid token technology through the Digital Rights Management Module 204, which verifies token ownership before granting access to interactive features. This ensures that only authorized users can participate in the enhanced interactive experiences while maintaining the integrity of the content distribution system.

The entire system may operate within a cloud-based infrastructure (shown in FIG. 1) that provides the necessary scalability and performance to support real-time interactions across multiple devices and users simultaneously.

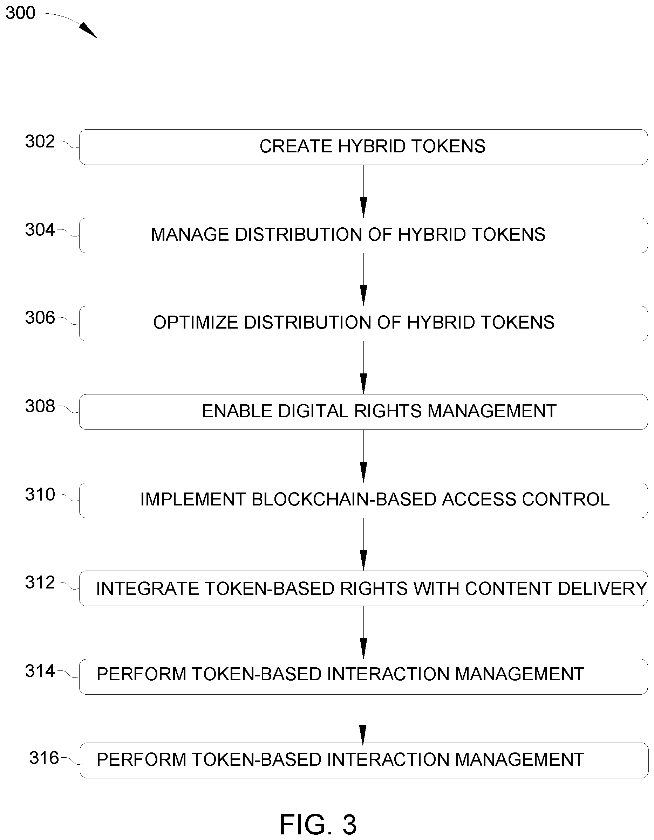

FIG. 3 is a block diagram illustrating an example method 300 of creating, distributing, and/or managing hybrid tokens that serve as proof of ownership and/or access keys for digital content, while also facilitating dynamic rights management and/or interactive content delivery.

At operation 302, hybrid tokens are created. In example embodiments, content creators are provided with an option to mint unique tokens that possess both fungible and non-fungible properties. Content creators may interact with the system to specify parameters, such as a number of editions and price per token. In example embodiments, unique identifiers are generated for each token, encoding both fungible and non-fungible properties to create a hybrid structure that allows for fractional ownership while maintaining the overall uniqueness of the asset.

At operation 304 token distribution is managed. In example embodiments, this operation involves interfacing with the blockchain to initiate the token minting process and managing the allocation of tokens to purchasers' accounts. The system handles these backend processes seamlessly, ensuring that tokens are properly created on the blockchain and distributed to the appropriate users.

At operation 306, token minting and/or distribution is optimized. For example, the system may employ an asynchronous queuing mechanism for blockchain transactions. This operation may include assessing the current speed and/or congestion of the blockchain network. Based on this assessment, token minting requests are queued and/or their release is strategically timed (e.g., to minimize transaction costs and delays). These queued requests may be released at optimal intervals and/or asynchronous reconciliation may be performed (e.g., to ensure all transactions are accurately recorded on the blockchain).

At operation 308, dynamic digital rights management is enabled (e.g., through flexible modification of token properties and/or access rights). This operation includes expiring or revoking tokens when necessary, such as at the end of a subscription period. Additionally, the nature of tokens can be dynamically changed between fungible and non-fungible states, and/or future contracts may be implemented (e.g., where tokens are minted only when specific conditions are met).

At operation 310, blockchain-based access control is implemented. For example, when a user attempts to access content, the system verifies token ownership by checking the blockchain. Based on the specific tokens held by the user, the system may grant different levels of access, such as preview mode or full 4K streaming capabilities and/or grant location / date/time conditional access.

At operation 312, token-based rights are integrated with content delivery. This operation involves verifying token ownership before initiating high-quality content streams and/or managing different quality levels of content delivery based on the properties of the tokens held by the user.

At operations 314, token-based interaction management is performed (e.g., to manage interactive features). This operation may include verifying token ownership before allowing users to participate in interactive elements of the content and/or managing group interactions based on the token ownership of multiple users.

At operation 316, decentralization is balanced with content protection through a controlled distribution mechanism. For example, this operation may involve performing on-chain verification of token ownership while coordinating off-chain content delivery based on the results of these on-chain verifications. This approach allows the system to leverage the benefits of blockchain technology while maintaining necessary control over content distribution.

In example embodiments, a blockchain-based access control mechanism is employed that verifies token ownership on-chain before granting content access. This process involves querying the blockchain network to confirm the user's ownership of specific tokens associated with the requested content. Once ownership is verified (e.g., in both on-chain record and off chain ledger_, the system coordinates off-chain content delivery based on the on-chain verification results. This approach allows for efficient content distribution while maintaining the security and immutability benefits of blockchain technology.

In example embodiments, an asynchronous queuing mechanism for minting hybrid tokens on the blockchain is incorporated. This mechanism continuously assesses network congestion and strategically times token minting requests to optimize transaction costs and processing times. By queuing minting requests and releasing them at optimal intervals, the system significantly improves efficiency and/or resiliency, and/or reduces delays associated with blockchain transactions.

In example embodiments, a dynamic content delivery mechanism is implemented that verifies token ownership before initiating content streaming and/or secure message delivery. This mechanism grants different levels of content access based on specific token properties, allowing for granular control over content distribution (e.g., by the initial creator of the content and/or subsequent owner of the content. The system can adjust content quality and interactive features in real-time based on token ownership status, ensuring that users receive the appropriate level of access and quality for their specific tokens.

In example embodiments, the granting of different levels of content access based on specific token properties is enabled. This feature allows content creators to define various tiers of access or privileges associated with different token types or attributes. The system interprets these properties and adjusts the user's access accordingly, providing a flexible framework for managing content rights.

In example embodiments, functionality to adjust content quality and interactive features in real-time based on token ownership status is incorporated. This dynamic adjustment capability ensures that users receive the optimal viewing experience based on their current token holdings, which may change over time due to token transfers, expirations, or modifications.

In example embodiments, a blockchain-based access control mechanism enables fractional ownership and/or transferability of digital content rights through hybrid tokens. This mechanism allows multiple users to hold partial ownership rights to a single piece of content, represented by their respective tokens. The fractional ownership model may be implemented through smart contracts on the blockchain, which define the terms and conditions of ownership and govern the transfer of rights between users.

The system's ability to enable fractional ownership and/or transferability may be particularly valuable for digital content marketplaces. It allows creators to issue, distribute, and sell licenses to their content, potentially increasing liquidity and/or accessibility for high-value assets. Users can buy, sell, or trade their fractional ownership tokens, with the blockchain providing a secure and transparent record of all transactions.

Furthermore, the system's coordination of off-chain content delivery based on on-chain verification results addresses scalability concerns often associated with blockchain-based systems. By performing resource-intensive operations (such as content streaming) off-chain while maintaining the integrity of ownership and access rights on-chain, the system achieves a balance between performance and security.

This hybrid approach to content delivery and rights management, combined with the unique properties of the system's hybrid tokens, creates a flexible and efficient ecosystem for digital content distribution. It addresses key limitations in prior art systems, providing content creators with more control over their assets while offering users a more dynamic and interactive content consumption experience. For example, the system allows owners of content to update and/or add terms to a license associated with the content as permitted within the master terms provided by the creator

In example embodiments, a sophisticated architecture supports flexible digital rights management. In example embodiments, a hybrid token management module interfaces directly with a blockchain network, such as Ethereum, to create and/or distribute tokens with unique properties. These hybrid tokens are designed to be fungible within the context of a specific creator's content while remaining non-fungible when compared to tokens from other creators. In addition, each fungible token can carry multiple layers of unique and non-fungible information in order to maintain the most up to date information associated with each token. This dual nature is achieved through a novel encoding process that generates unique identifiers for each token, incorporating both fungible and non-fungible attributes.

To address the challenge of unknown transaction times and the network cost on blockchain networks, the system employs an innovative asynchronous queuing mechanism. This mechanism continuously assesses the speed and congestion of the blockchain network in real-time. Based on this assessment, the system strategically queues token minting requests and releases them at optimal intervals to minimize transaction costs and delays. The queuing system performs reconciliation asynchronously, significantly improving overall efficiency and/or resiliency, and/or reducing congestion-related bottlenecks that could otherwise hinder the real-time interactivity of the platform.

The digital rights management capabilities of the system are enhanced through a blockchain-based access control mechanism. When a user attempts to access content, the system verifies token ownership by querying the blockchain. This verification process allows for granular control over content access, enabling the system to provide different quality levels of content (e.g., preview, full 4K streaming) based on the specific tokens held by the user. The system maintains a delicate balance between decentralization and content protection through a combination of on-chain token verification and off-chain content delivery.

In example embodiments, token properties may be modified dynamically, allowing for flexible rights management. This includes the capability to expire or revoke tokens when necessary, such as at the end of a subscription period, and to change the nature of tokens between fungible and non-fungible states as required. The implementation of future contracts is also supported, where tokens are minted only when specific conditions are met, providing additional flexibility in managing digital rights.

In example embodiments, the content delivery aspect of the system is integrated with the token-based rights management. A dynamic content delivery mechanism verifies token ownership before initiating high-quality content streams and/or interactive material, and manages different quality levels of content delivery based on the properties of the tokens held by the user. This mechanism also checks the users' behavior context (e.g., location, date, and/or time) and/or ensures terms defined by the creators or advertisers. It may also ensure that users receive the appropriate level of access and quality based on their token ownership status.

Thus, a comprehensive solution for creating, distributing, and/or managing hybrid tokens that serve as proof of ownership and/or access keys for digital content is provided. This approach addresses key limitations in prior art systems and creates a more flexible, efficient, and/or creator-friendly digital content ecosystem.

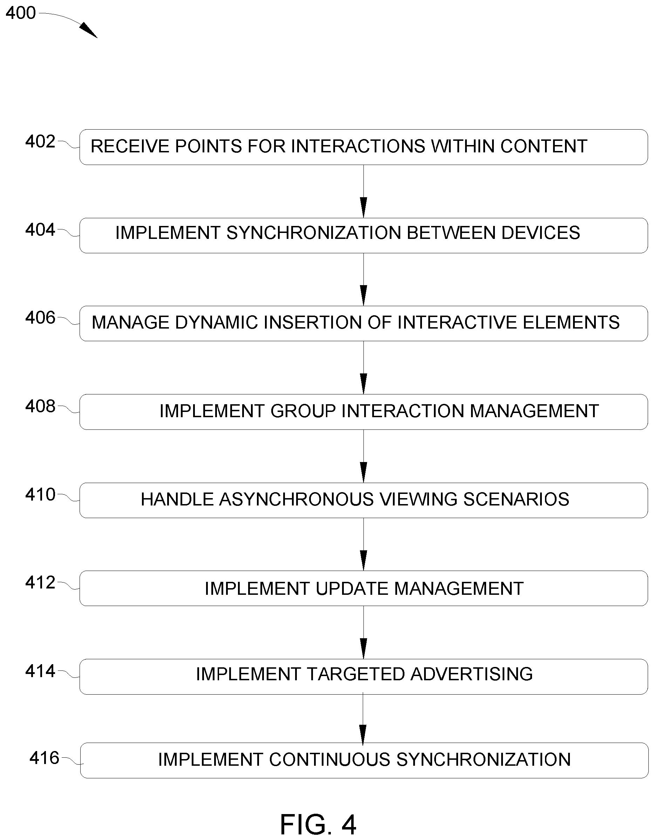

FIG. 4 is a block diagram illustrating an example method 400 of integrating hybrid token technology with synchronized multi-device content delivery and/or user content interaction.

At 402, one or more markings of specific points for potential interactions within their content are received from content creators. This operation may involve providing an interface for creators to play their video content and/or designate precise timestamps (or locations) where interactive elements can be inserted. The system may then store these markers, associating them with the specific content and/or creating a timeline of potential interaction points.

At operation 404, once the content is prepared with interaction markers, a sophisticated synchronization mechanism is implemented between a first app and a second app. This operation may involve establishing a real-time communication channel between the two devices, ensuring that the mobile app is aware of the current playback position on the TV. The system may continuously monitor the playback progress and/or trigger the appropriate interactive elements on the mobile device when the corresponding markers in the content are reached.

At operation 406, as the content plays, dynamic insertion of interactive elements is managed. This operation may involve retrieving pre-defined interactive content associated with each marker and/or delivering it to the user's mobile device at the precise moment specified by the creator. The system supports various types of interactive elements, including creator commentary, additional video content, forms for user input, or e-commerce opportunities related to on-screen items.

At operation 408, group interaction management is implemented (e.g., to enable social viewing experiences. This may involve creating virtual viewing sessions where multiple users can join and/or interact with the same content simultaneously. The system manages user authentication for these sessions, synchronizes playback across all participants, and/or facilitates the sharing of comments, reactions, and/or user-generated content (such as short video clips) among the group.

At operation 410, asynchronous viewing scenarios are handled (e.g., through a sophisticated timeline management operation). This may involve storing interaction data and/or user-generated content associated with specific points in the video timeline. When a user joins a viewing session at a later time, the system retrieves and displays relevant past interactions at the appropriate points in the content, creating a cohesive interactive experience even for users who are not watching in real-time.

At operation 412, update management is implemented (e.g., to support the dynamic nature of the interactive content). This may allow content creators to modify, add, and/or remove interactive elements associated with their content without altering the original video stream. These updates are managed to, for example, ensure that the latest interactive elements are always presented to viewers, even if they are rewatching content they've seen before.

At operation 414 targeted advertising is implemented. This may involve analyzing user data, content context, and/or interaction markers to deliver personalized, non-disruptive advertisements to the user's mobile device at strategic points during content playback. The timing and/or relevance of these advertisements is managed, ensuring they enhance rather than detract from the viewing experience.

At operation 416, continuous synchronization and/or quality management is implemented. This may involve monitoring the connection between the first app and/or the second app, adjusting for any latency issues, and/or ensuring that interactive elements are delivered smoothly and in sync with the main content. Different quality levels of content delivery may be managed (e.g., based on device capabilities and/or network conditions), optimizing the viewing experience across various scenarios.

In example embodiments, the system implements a sophisticated multi-device synchronization mechanism for digital content playback. This mechanism enables seamless coordination between a primary display device, such as a television, and a secondary device, such as a mobile phone or tablet. The television device may be responsible for displaying the main digital content, while the secondary device may present interactive elements associated with the content. This dual-device approach allows for an enhanced viewing experience without interrupting the primary content stream.

The system may incorporate a dynamic interactive element insertion feature based on predefined markers within the digital content. Content creators can define (e.g., programmatically or via a provided graphical user interface) specific timestamps or points within their content where interactive elements can be triggered. These markers may be stored in association with the digital content and/or serve as triggers for displaying corresponding interactive elements on the secondary device. The interactive elements can take various forms, including textual information, additional video content, user input forms, advertisements, or e-commerce opportunities. Importantly, the system may allow content creators to update or modify these interactive elements dynamically without altering the original digital content, providing flexibility for ongoing engagement strategies. This enables just-in-time messaging for recipients as designed by the content creator instead of continuous push notification.

In example embodiments, the system implements a group interaction management capability. This functionality creates one or more virtual viewing sessions where multiple users can simultaneously interact with the digital content. The system may authenticate users joining these sessions and/or facilitate the sharing of user-generated content, such as comments, reactions, or even short video clips, which can then be displayed on other users' television devices. This creates a shared, social viewing experience even when users are not physically co-located.

To support asynchronous viewing scenarios, the system implements a sophisticated interaction data storage and retrieval mechanism. Interaction data, including user-generated content and system-triggered events, is stored with associated metadata (e.g., timestamps) corresponding to specific points in the digital content timeline. This data is indexed and organized to allow efficient retrieval (e.g., based on metadata queries). When users join a viewing session at different times, the system can quickly access and present relevant past interactions, providing context and/or maintaining the communal viewing experience.

The system employs advanced data management techniques for storing interaction data. Each interaction is associated with a corresponding metadata in the digital content, and an indexed database is created to link interactions to their respective metadata (e.g., timestamps). Metadata for each interaction, including timestamps, user identification, interaction type, and any user-generated content, may be stored alongside the interaction data. To ensure efficient storage and data privacy, the system may compress and/or encrypt the stored interaction data. A fast retrieval mechanism may be implemented to allow quick access to interactions based on their associated metadata, facilitating seamless integration of past interactions for users joining sessions at different times.

For users joining a viewing session at different times, the system implements a sophisticated retrieval and presentation mechanism for past interactions. Upon joining, the system determines the current playback position in the digital content timeline for the new user. It then queries the stored interaction data to retrieve relevant interactions associated with timestamps prior to the current playback position. These retrieved interactions are filtered based on user preferences or content relevance to ensure a personalized and meaningful experience. The system presents a summary of past interactions to the newly joined user in a non-disruptive manner, allowing them to quickly catch up on the shared viewing experience. This mechanism enables the new user to seamlessly participate in ongoing interactions while having access to contextually relevant past interactions.

The system may incorporate dynamic adjustment capabilities for interactive elements based on real-time user engagement metrics. For example, it may analyze user interaction patterns to predict optimal timing for displaying interactive elements, enhancing user engagement without disrupting the viewing experience. Additionally, the system may leverage user viewing history and/or preferences to automatically generate personalized interactive content. A machine learning algorithm may be implemented to continuously improve the relevance and effectiveness of the interactive elements, adapting to changing user behaviors and preferences over time.

In example embodiments, to further enhance the interactive experience, the system allows content creators to define conditional interactive elements that are triggered based on specific user actions or group dynamics. This feature enables more complex and engaging interactive scenarios, targeting to deliver a message at the right time, in the right location, and/or for the right purpose for the recipient, like a time capsule message. A collaborative filtering system is implemented to recommend interactive elements to users based on similar viewing patterns within the group, fostering a more personalized and relevant experience. Content creators are provided with a comprehensive dashboard for real-time monitoring and/or adjustment of interactive element performance across multiple viewing sessions, allowing for data-driven optimization of the interactive content strategy. To support monetization opportunities, the system may integrate a secure payment gateway, enabling seamless e-commerce transactions within the interactive elements without disrupting the viewing experience.

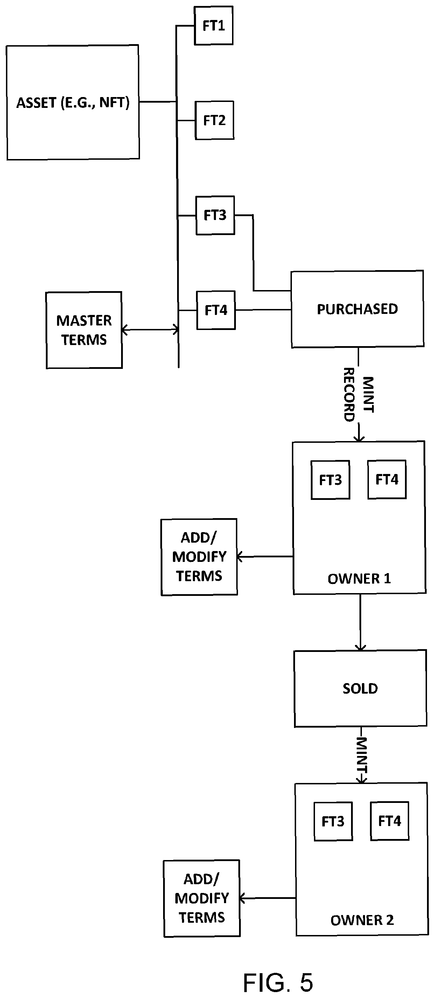

FIG. 5 illustrates a comprehensive technical architecture diagram depicting the hybrid token structure and lifecycle within the blockchain-based digital rights management system.

Token Structure and Relationship. The diagram shows an ASSET (e.g., NFT) as the parent entity that serves as the non-fungible container for multiple fungible tokens (FT1, FT2, FT3, and FT4). This hierarchical relationship implements the novel hybrid token approach where tokens maintain fungibility within a specific creator's content ecosystem while preserving non-fungibility when compared across different creators' content.

The MASTER TERMS component is bidirectionally linked to FT4, representing the contractual framework established by the content creator. This connection illustrates how the system encodes both fungible and non-fungible properties through a sophisticated encoding process that generates unique identifiers for each token. The master terms define the parameters within which subsequent modifications to token properties are permitted, establishing governance boundaries for the token lifecycle.

Token Lifecycle Implementation. The diagram details the technical implementation of the token lifecycle through three key phases: Initial Purchase and Minting: When tokens are PURCHASED, the system creates a MINT RECORD for tokens FT3 and FT4, establishing an immutable record on the blockchain that associates these tokens with OWNER 1. This minting process employs the asynchronous queuing mechanism that strategically times token minting requests to optimize transaction costs and processing efficiency on the blockchain network.

Ownership and Modification Rights: OWNER 1 is granted the technical capability to ADD/MODIFY TERMS within the constraints defined by the master terms. This modification capability is implemented through smart contracts that verify permissions before allowing changes. The system maintains a hash of the transaction history within the token itself, creating an auditable trail of modifications while preserving the integrity of the original content and ownership record.

Transfer and Re-minting: When tokens are SOLD, the system executes a new minting operation (MINT→) that transfers ownership to OWNER 2 while preserving the token's history and properties. This transfer process involves on-chain verification of the transaction and updates both the blockchain record and any off-chain content delivery permissions associated with the tokens.

The hybrid token structure is technically implemented through a multi-nested chain model that enables dynamic modifications to token properties while maintaining the overall asset's uniqueness. Each fungible token contains or links to information about the secure digital ID of the owner, a hash value of previous updates, and specific license terms.

The system employs a dual verification mechanism that combines on-chain token verification with off-chain content delivery, creating a balance between decentralization and content protection. This approach addresses scalability concerns often associated with blockchain-based systems by performing resource-intensive operations off-chain while maintaining ownership and access rights verification on-chain.

The ADD/MODIFY TERMS functionality is implemented through smart contracts that define the terms and conditions of ownership and govern the transfer of rights between users, enabling fractional ownership and transferability of digital content rights through the hybrid tokens. This technical architecture supports sophisticated digital rights management that allows for granular control over content access based on specific token properties.

### EXAMPLE MOBILE DEVICE

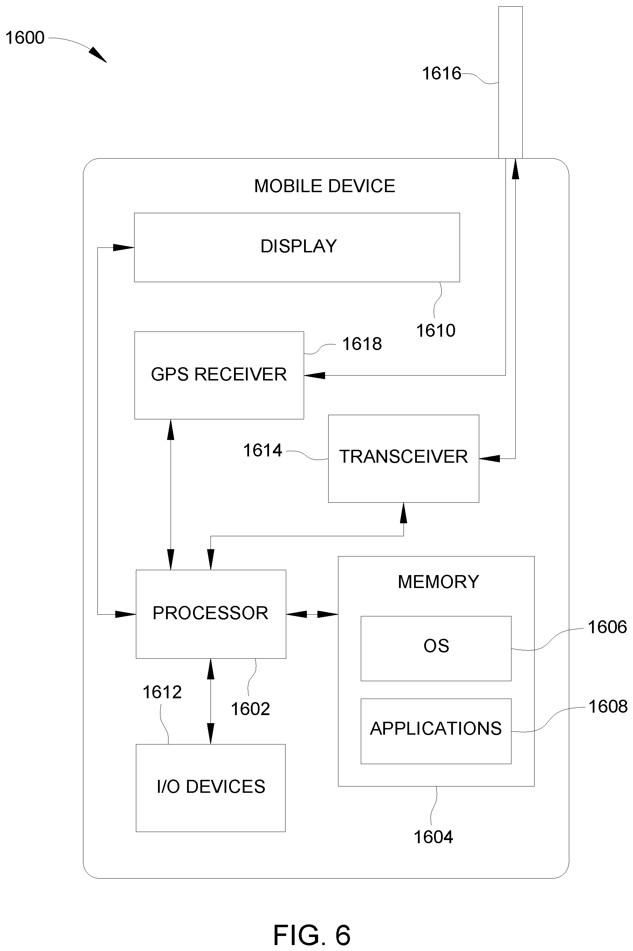

FIG. 6 is a block diagram illustrating a mobile device 1600, according to an example embodiment.

The mobile device 1600 can include a processor 1602. The processor 1602 can be any of a variety of different types of commercially available processors suitable for mobile devices 1600 (for example, an XScale architecture microprocessor, a Microprocessor without Interlocked Pipeline Stages (MIPS) architecture processor, or another type of processor). A memory 1604, such as a random access memory (RAM), a Flash memory, or other type of memory, is typically accessible to the processor 1602. The memory 1604 can be adapted to store an operating system (OS) 1606, as well as application programs 1608, such as a mobile location-enabled application that can provide location-based services (LBSs) to a user. The processor 1602 can be coupled, either directly or via appropriate intermediary hardware, to a display 1610 and to one or more input/output (I/O) devices 1612, such as a keypad, a touch panel sensor, a microphone, and the like. Similarly, in some embodiments, the processor 1602 can be coupled to a transceiver 1614 that interfaces with an antenna 1616. The transceiver 1614 can be configured to both transmit and receive cellular network signals, wireless data signals, or other types of signals via the antenna 1616, depending on the nature of the mobile device 1600. Further, in some configurations, a GPS receiver 1618 can also make use of the antenna 1616 to receive GPS signals.

In example embodiments, the described methods and system of interactive content delivery comprise synchronizing playback of digital content across a first device and a second device, wherein the first device displays the digital content and the second device displays one or more interactive elements; associating the one or more interactive elements with the digital content based on one or more predefined markers, wherein the one or more interactive elements are displayed on the second device without interrupting the playback on the first device; managing one or more group interactions by creating one or more virtual viewing sessions where multiple users can interact simultaneously with the digital content, the interacting including sharing user-generated content that appears on other users' television devices; storing interaction data associated with the one or more group interactions at one or more specific points in a digital content timeline; and/or retrieving the interaction data for one or more of the multiple users joining a viewing session at different times.

In example embodiments, the associating the one or more interactive elements with the digital content based on one or more predefined markers comprises receiving, from a content creator, one or more selections of one or more timestamps within the digital content for inserting interactive elements; storing the selected one or more timestamps as predefined markers associated with the digital content; allowing the content creator to define different types of interactive elements for each predefined marker, including at least one of textual information, additional video content, user input forms, or e-commerce opportunities; and/or enabling the content creator to dynamically update or modify the interactive elements associated with each predefined marker without altering the digital content.

In example embodiments, the managing of the one or more group interactions comprises authenticating the multiple users to join the one or more virtual viewing sessions; moderating user-generated content submissions based on predefined content guidelines; providing options for users to customize their viewing experience within the one or more virtual viewing sessions; and/or generating analytics on user engagement or interaction patterns during the one or more virtual viewing sessions.

In example embodiments, the storing of the interaction data associated with the one or more group interactions at one or more specific points in a digital content timeline comprises associating each interaction with a corresponding timestamp in the digital content; creating an indexed database of the one or more group interactions linked to their respective timestamps; storing metadata for each interaction, the metadata including one or more of user identification, interaction type, or user-generated content; compressing and encrypting the stored interaction data to ensure efficient storage or data privacy; and/or implementing a retrieval mechanism that allows access to the one or more group interactions based on their associated timestamps when users join the viewing session at different times.

In example embodiments, the retrieving of the interaction data for one or more of the multiple users joining a viewing session at different times comprises determining a current playback position in the digital content timeline for a newly joined user; querying the stored interaction data to retrieve at least one relevant interaction from the one or more group interactions associated with timestamps prior to the current playback position; filtering the at least one relevant interaction based on user preferences or content relevance; presenting a summary of one or more past group interactions to the newly joined user without disrupting their current viewing experience; and/or enabling the newly joined user to seamlessly participate in ongoing group interactions while having access to the one or more past group interactions.

In example embodiments, the methods and systems comprise dynamically adjusting a content of the one or more interactive elements based on real-time user engagement metrics; analyzing user interaction patterns to predict optimal timing for displaying one or more interactive elements; automatically generating personalized interactive content for each user based on their viewing history and preferences; and/or implementing a machine learning algorithm to continuously improve a relevance or effectiveness of the one or more interactive elements.

In example embodiments, the methods and systems comprise enabling content creators to define conditional interactive elements that are triggered based on specific user actions or group dynamics; implementing a collaborative filtering system to recommend interactive elements to users based on similar viewing patterns within the one or more group interactions; providing a creator dashboard for real-time monitoring and adjustment of interactive element performance across multiple viewing sessions; and/or integrating a secure payment gateway for seamless e-commerce transactions within the one or more interactive elements.

In example embodiments, the described asynchronous queuing mechanism for blockchain transactions employs a sophisticated algorithm to optimize token minting and distribution. This system continuously monitors blockchain network conditions, including transaction speeds and gas prices, to determine the optimal timing for token minting requests. When network congestion is detected, the system strategically queues minting requests and releases them in batches during periods of lower network activity. This approach significantly reduces transaction costs and minimizes delays associated with blockchain operations. The queuing system also implements an intelligent prioritization scheme, ensuring that time-sensitive transactions are processed promptly while less urgent requests are deferred to more favorable network conditions. Additionally, the system performs asynchronous reconciliation, allowing for efficient tracking and verification of minted tokens without impacting the user experience.

The described hybrid token technology enables a novel approach to fractional ownership of digital assets. Content creators can issue multiple tokens representing partial ownership or access rights to a single piece of content. This fractional ownership model may be particularly valuable for high-value digital assets, allowing for increased liquidity and accessibility. The system implements smart contracts on the blockchain to define the terms and conditions of fractional ownership, governing the transfer of rights between users. These smart contracts can include provisions for revenue sharing, voting rights on content modifications, or other collaborative decision-making processes. The fractional ownership feature opens up new possibilities for content monetization, allowing creators to sell partial rights to their work while retaining overall control and benefiting from potential appreciation in value.

The described dynamic content update feature provides content creators with unprecedented flexibility in managing interactive elements. Through a user-friendly interface, creators can modify, add, or remove interactive elements associated with specific timestamps or other metadata associated with their content without altering the original video stream. This capability allows for real-time adjustments based on audience engagement metrics or changing contextual factors. For example, a creator could update interactive elements to reflect current events, seasonal themes, or emerging trends, ensuring that the content remains relevant and engaging over time. The system maintains a version history of interactive elements, allowing creators to revert changes or A/B test different interactive strategies. This dynamic update functionality extends to all types of interactive elements, including quizzes, polls, additional information overlays, and e-commerce opportunities.

In example embodiments, the system incorporates multiple monetization strategies to maximize revenue potential for content creators. In addition to traditional subscription and/or pay-per-view models, the platform enables seamless integration of e-commerce functionality within the interactive elements. During content playback, viewers can purchase products or services directly related to the on-screen content without interrupting their viewing experience. The system also supports microtransactions for premium interactive features or exclusive content access. A flexible revenue-sharing model is implemented, allowing content creators to collaborate with brands or other creators and automatically distribute earnings based on predefined agreements. Additionally, the platform includes a tipping mechanism, enabling viewers to show appreciation for content through direct monetary contributions. These diverse monetization options are managed through a unified dashboard, providing creators with comprehensive financial insights and performance metrics.

The analytics and creator dashboard feature provides content creators with powerful tools for monitoring and optimizing their interactive content strategy. The dashboard offers real-time insights into viewer engagement, including metrics such as interaction rates, viewing duration, and audience demographics. Advanced analytics capabilities leverage machine learning algorithms to identify patterns in user behavior and predict content performance. Creators can track the effectiveness of different interactive elements, comparing engagement rates across various types of interactions and content segments. The dashboard also provides A/B testing functionality, allowing creators to experiment with different interactive strategies and/or automatically optimize based on performance data. Additionally, the system generates personalized recommendations for improving content engagement, suggesting optimal placement and/or timing for interactive elements based on historical data and industry benchmarks.

The conditional interactive elements feature enables content creators to design complex, dynamic viewing experiences that adapt to individual user actions and group dynamics. Creators can define triggers based on various factors, such as viewer responses to previous interactions, cumulative group behavior, or external data sources. For example, an interactive story could branch into different narratives based on collective audience choices, or a live event stream could unlock special interactive features when a certain number of viewers are simultaneously engaged. The system supports the creation of multi-step interactive sequences, where each interaction influences subsequent options presented to the viewer. This conditional logic can also be applied to personalize the viewing experience, tailoring interactive elements to individual user preferences, viewing history, or demographic information. The flexibility of this feature allows for the creation of highly engaging, gamified content experiences that encourage repeated viewing and deeper audience investment.

In example embodiments, the system incorporates advanced machine learning techniques to enhance various aspects of the interactive streaming and digital rights management processes. For example, one or more components may include an implementation of one or more machine learning models for content analysis and/or interactive element optimization. This model may be trained on large datasets of user interactions, content metadata, and/or engagement metrics to learn complex patterns and relationships within the data.

The one or more machine learning models may service one or more purposes within the system. For example, they may be used to analyze incoming content and/or automatically identify potential points for interactive element insertion. By processing video frames, audio data, and/or associated metadata, the one or more models can recognize scenes, objects, or dialogue that may be suitable for viewer interaction. This automated marking system significantly reduces the manual workload for content creators while ensuring consistent and engaging interactive experiences.

In example embodiments, the one or more models may employed in real-time to optimize the delivery and presentation of interactive elements. As users interact with the content, the system continuously feeds this data into the one or more models, which then makes predictions about the most effective types, timings, and/or placements of future interactive elements. This dynamic optimization process may analyze streaming data, interactive material data, and/or behavior of users on the mobile devices, leading to improved user engagement and/or a more personalized viewing experience.

In example embodiments, the machine learning system also plays a role in the platform's anomaly detection capabilities, particularly in identifying potential misuse of digital rights or unauthorized content access. By analyzing patterns in token usage that are referenced within the token as well as recorded data in the blockchain ledger, content access requests, and/or user behavior, the one or more models can flag suspicious activities for further investigation. This proactive approach to security enhances the overall integrity of the digital rights management system.

In example embodiments, the one or more machine learning models may be utilized in the platform's recommendation engine, which suggests relevant content and/or interactive experiences to users based on their viewing history, interaction patterns captured within the mobile devices, and/or token ownership. This personalized recommendation system not only improves user satisfaction but also drives engagement with the platform's diverse content offerings.

The integration of machine learning in the digital rights management process, particularly in the verification and management of hybrid tokens, represents a technological improvement over conventional blockchain-based systems.

By incorporating these machine learning elements, the system achieves a level of sophistication and adaptability that goes beyond conventional content delivery and rights management platforms. The model's ability to continuously learn and optimize based on real-time data ensures that the system can adapt to changing user preferences, content trends, and/or potential security threats, thereby providing a more robust, efficient, and/or engaging platform for both content creators and consumers.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. In example embodiments, one or more computer systems (e.g., a standalone, client or server computer system) or one or more processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or other programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired) or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses) that connect the hardware-implemented modules. In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor- implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs).)

### ELECTRONIC APPARATUS AND SYSTEM

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine- readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., a field programmable gate array (FPGA) or an application-specific integrated circuit (ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

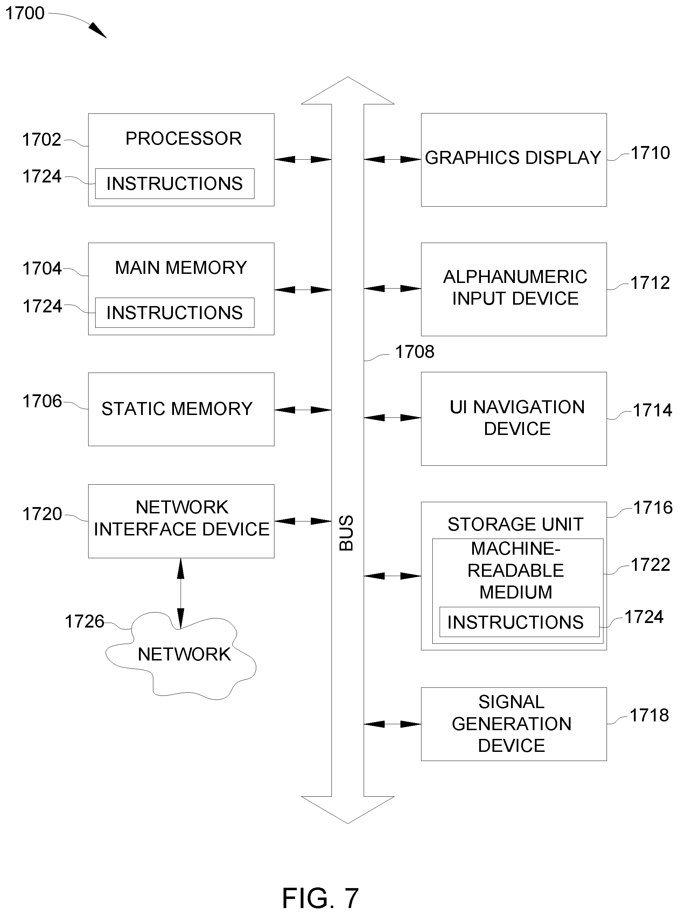

FIG. 7 is a block diagram of an example computer system 1700 on which methodologies and operations described herein may be executed, in accordance with an example embodiment.

In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1700 includes a processor 1702 (e.g., a central processing unit (CPU), a graphics processing unit (GPU) or both), a main memory 1704 and a static memory 1706, which communicate with each other via a bus 1708. The computer system 1700 may further include a graphics display unit 1710 (e.g., a liquid crystal display (LCD) or a cathode ray tube (CRT)). The computer system 1700 also includes an alphanumeric input device 1712 (e.g., a keyboard or a touch-sensitive display screen), a user interface (UI) navigation device 1714 (e.g., a mouse), a storage unit 1716, a signal generation device 1718 (e.g., a speaker) and a network interface device 1720.

### MACHINE-READABLE MEDIUM

The storage unit 1716 includes a machine-readable medium 1722 on which is stored one or more sets of instructions and data structures (e.g., software) 1724 embodying or utilized by any one or more of the methodologies or functions described herein. The instructions 1724 may also reside, completely or at least partially, within the main memory 1704 and/or within the processor 1702 during execution thereof by the computer system 1700, the main memory 1704 and the processor 1702 also constituting machine-readable media.

While the machine-readable medium 1722 is shown in an example embodiment to be a single medium, the term "machine-readable medium" may include a single medium or multiple media (e.g., a centralized or distributed database, and/or associated caches and servers) that store the one or more instructions 1724 or data structures. The term "machine-readable medium" shall also be taken to include any tangible medium that is capable of storing, encoding or carrying instructions (e.g., instructions 1724) for execution by the machine and that cause the machine to perform any one or more of the methodologies of the present disclosure, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

### TRANSMISSION MEDIUM

The instructions 1724 may further be transmitted or received over a communications network 1726 using a transmission medium. The instructions 1724 may be transmitted using the network interface device 1720 and any one of a number of well-known transfer protocols (e.g., HTTP). Examples of communication networks include a local area network ("LAN"), a wide area network ("WAN"), the Internet, mobile telephone networks, Plain Old Telephone Service (POTS) networks, and wireless data networks (e.g., WiFi and WiMax networks). The term "transmission medium" shall be taken to include any intangible medium that is capable of storing, encoding or carrying instructions for execution by the machine, and includes digital or analog communications signals or other intangible media to facilitate communication of such software.

Although an embodiment has been described with reference to specific example embodiments, it will be evident that various modifications and changes may be made to these embodiments without departing from the broader spirit and scope of the present disclosure. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system comprising:
one or more computer processors;
one or more computer memories;
a set of instructions stored in the one or more computer memories, the set of instructions configuring the one or more computer processors to perform operations, the operations comprising:
creating one or more hybrid tokens associated with digital content, wherein each hybrid token is fungible within a specific creator's content but non-fungible when compared to other creators' tokens; and
modifying one or more properties of the one or more hybrid tokens, the modifying including expiring or revoking at least one of the one or more hybrid tokens or changing a fungible/non-fungible state of the at least one of the one or more hybrid tokens.

2. The system of claim 1, the operations further comprising implementing a blockchain-based access control mechanism that verifies token ownership on-chain before granting content access, coordinates off-chain content delivery based on on-chain verification results, and enables fractional ownership or transferability of digital content rights through the one or more hybrid tokens.

3. The system of claim 1 or 2, the operations further comprising verifying ownership of the one or more hybrid tokens to control access to different quality levels of the digital content.

4. The system of any one of claims 1 to 3, the operations further comprising implementing an asynchronous queuing mechanism for minting the one or more hybrid tokens on a blockchain, the implementing including assessing network congestion or strategically timing token minting requests.

5. The system of any one of claims 1 to 4, the operations further comprising implementing a dynamic content delivery mechanism that verifies token ownership before initiating content streaming.

6. The system of any one of claims 1 to 5, the operations further comprising granting different levels of content access based on specific token properties.

7. The system of any one of claims 1 to 6, the operations further comprising adjusting content quality or interactive features in real-time based on token ownership status.

8. A method, preferably a computer implemented method, comprising:
creating one or more hybrid tokens associated with digital content, wherein each hybrid token is fungible within a specific creator's content but non-fungible when compared to other creators' tokens; and
modifying one or more properties of the one or more hybrid tokens, the modifying including expiring or revoking at least one of the one or more hybrid tokens or changing a fungible/non-fungible state of the at least one of the one or more hybrid tokens.

9. The method of claim 8, further comprising implementing a blockchain-based access control mechanism that verifies token ownership on-chain before granting content access, coordinates off-chain content delivery based on on-chain verification results, and enables fractional ownership or transferability of digital content rights through the one or more hybrid tokens.

10. The method of claim 8 or 9, further comprising verifying ownership of the one or more hybrid tokens to control access to different quality levels of the digital content.

11. The method of any one of claims 8 to 10, further comprising implementing an asynchronous queuing mechanism for minting the one or more hybrid tokens on a blockchain, the implementing including assessing network congestion or strategically timing token minting requests.

12. The method of any one of claims 8 to 11, further comprising implementing a dynamic content delivery mechanism that verifies token ownership before initiating content streaming.

13. The method of any one of claims 8 to 12, further comprising granting different levels of content access based on specific token properties.

14. The method of any one of claims 8 to 13, further comprising adjusting content quality or interactive features in real-time based on token ownership status.

15. A non-transitory computer-readable storage medium storing a set of instructions that, when executed by one or more computer processors, causes the one or more computer processors to perform a method according to any one of claims 8 to 14.
